# DEMANDE DE BREVET EUROPEEN

(11) **EP 3 293 650 A1**
(43) Date de publication de la demande: **14.03.2018**
(21) Numéro de dépôt: 17189975.0
(22) Date de dépôt: 07.09.2017
(51) Int. Cl.: G06F 17/50

(54) **PROCÉDÉ, DISPOSITIF ET PROGRAMME D'ORDINATEUR D'AIDE AU CHOIX ET À L'INSTALLATION D'ÉLÉMENTS MATÉRIELS DE CONSTRUCTION**

(30) Priorité: 08.09.2016 FR 1658374
(71) Demandeur: Applications Logiciels Pour Ingénierie ALPI, 92700 Colombes (FR)
(72) Inventeur: Fanet, Michel, 78290 Croissy S/Seine (FR)
(74) Mandataire: Imbert de Tremiolles, Ghislain

(57) **Abrégé**

L'invention a notamment pour objet l'aide à l'installation d'un élément matériel de construction décrit dans au moins une base de données comprenant la description de plusieurs éléments matériels ayant une même fonction technique. Après avoir reçu des spécifications techniques, une fonction d'un élément matériel à installer est déterminée à partir de celles-ci. Un élément matériel identifié selon la fonction déterminée est utilisé pour créer un modèle générique. Ce dernier est alors utilisé pour effectuer une étude de conception de l'installation. Des résultats de cette étude sont ensuite utilisés avec un identifiant de l'élément matériel utilisé pour créer le modèle générique afin d'effectuer des études complémentaires et déterminer un élément matériel à installer.

## Description

### DOMAINE DE L'INVENTION

La présente invention concerne les logiciels d'étude pour la conception et la réalisation d'installations dans le domaine de la construction et plus particulièrement un procédé, un dispositif et un programme d'ordinateur d'aide au choix et à l'installation d'éléments matériels de construction.

### CONTEXTE DE L'INVENTION

Dans le processus de réalisation ou d'aménagement d'un bâtiment, les études des équipements techniques, en particulier électriques et énergétiques, sont effectuées en plusieurs étapes avec un degré de précision croissant.

Tout d'abord, dans une première phase, des études de conception sont conduites pour appréhender les problématiques techniques de l'ouvrage et définir un dossier de consultation des entreprises (DCE), constitué de documents descriptifs et de plans. L'exigence de neutralité des appels d'offres publics est satisfaite par l'indication de performances minimales, sans que le choix des éléments matériels et de leur fournisseur ait été réalisé. En conséquence, les exigences techniques prises en considération pour cette phase d'étude sont limitées.

Ces études sont généralement conduites par des cabinets d'étude et d'ingénierie. A ces fins, pour un même projet de construction, ils utilisent une maquette numérique qu'ils enrichissent sur la base de spécifications techniques préalablement reçues et des résultats de leurs études.

Une maquette numérique est, dans le domaine de la construction, un outil informatique comprenant une représentation graphique d'un bâtiment et un ensemble de données additionnelles liées à ce bâtiment. Ces dernières sont, par exemple, des données électriques pouvant comprendre des données de câblage (chemin de câblage, type de câble) et des données d'éléments matériels (type de matériel, caractéristiques, emplacement, etc.).

La représentation graphique peut être effectuée par un architecte ou par un bureau d'étude. Les données additionnelles sont généralement ajoutées au fur et à mesure de l'avancement de l'étude, par des spécialistes de chaque corps de métier. De façon conjointe, la représentation graphique peut être affinée au cours du temps.

Dans une seconde phase, pour répondre à une consultation ou un appel d'offres, des installateurs conduisent des études de réalisation. Au cours de ces dernières, les éléments matériels à utiliser sont choisis dans des catalogues de fabricants, selon des performances minimales exigées et selon des préférences de fournisseurs ou de gammes de produits. Ces études de réalisation, dites de « chiffrage », sont généralement effectuées par plusieurs installateurs, à partir de spécifications techniques. Cependant, alors que plusieurs installateurs sont sollicités pour ces études, un seul est généralement sélectionné lorsqu'il est décidé d'effectuer l'installation correspondante. Ainsi, du fait du risque de ne pas être sélectionné, les installateurs consacrent un temps aussi limité que possible à ces études qui s'avèrent, par conséquent, souvent approximatives.

Dans une troisième phase, le ou les installateurs sélectionnés doivent réaliser une étude finale de réalisation, détaillée, permettant à chacun des intervenants d'effectuer les tâches qui lui sont dévolues. Le ou les installateurs peuvent être amenés, au cours de cette phase, à effectuer des études de variantes de matériels, selon différents fournisseurs, ou selon leurs propres préférences, pour parvenir à une solution technico-économique satisfaisante.

Il existe un besoin pour améliorer la qualité des études de conception, de chiffrage et de réalisation, en réduisant le temps nécessaire pour les effectuer, et les aléas qui en résultent, pour limiter les ressources nécessaires aux études de chiffrage, ces dernières, en majorité, n'ayant pas de suite et pour optimiser le choix du matériel.

### RESUME DE L'INVENTION

L'invention permet de résoudre au moins un des problèmes exposés précédemment.

L'invention a ainsi pour objet un procédé pour ordinateur d'aide à l'installation d'au moins un élément matériel de construction à installer, cet au moins un élément matériel étant décrit dans au moins une base de données comprenant la description d'une pluralité d'éléments matériels ayant au moins une même fonction technique, la description de chaque élément matériel de la pluralité d'éléments matériels comprenant un identifiant, un ensemble de caractéristiques non techniques et un ensemble de caractéristiques techniques, ce procédé comprenant les étapes suivantes,
- réception d'exigences et/ou de contraintes d'installation sous forme de spécifications techniques ;
- détermination, à partir des spécifications techniques reçues, d'au moins une fonction d'au moins un élément matériel à installer et identification d'au moins un élément matériel de la pluralité d'éléments matériels selon ladite au moins une fonction déterminée ;
- interrogation d'au moins une base de données selon ledit au moins un élément matériel identifié et, en réponse à ladite interrogation, obtention de caractéristiques associées audit au moins élément matériel identifié et création d'un modèle générique, le modèle générique comprenant des informations techniques obtenues en réponse à ladite interrogation et déterminées selon au moins une information de contexte d'utilisation ;
- étude de conception de la dite installation, l'étude de conception étant au moins partiellement basée sur le modèle générique créé ;
- transmission de résultats de ladite étude de conception et d'au moins un identifiant dudit au moins un élément matériel identifié à au moins deux systèmes de traitement de l'information distincts, chacun des au moins deux systèmes de traitement de l'information permettant une étude complémentaire à ladite étude de conception ;
- en réponse à la transmission de résultats de ladite étude de conception et dudit au moins identifiant, réception, à partir de chacun des au moins deux systèmes de traitement de l'information, de résultats d'une étude complémentaire ; et
- comparaison des résultats reçus pour déterminer au moins un élément matériel à installer.

Le procédé selon l'invention permet ainsi d'utiliser, de façon masquée, des données relatives à des éléments matériels réels dans une étude de conception d'installation électrique et/ou énergétique d'une maquette numérique, pour respecter l'exigence de neutralité vis-à-vis des fournisseurs dans les appels d'offres publics et privés.

Le procédé selon l'invention permet en outre d'effectuer des choix automatisés d'éléments matériels, notamment lorsqu'ils sont constitués d'un ou plusieurs composants, selon des contraintes d'installation et des préférences d'un concepteur, et selon différents catalogues de fournisseurs regroupés dans une ou plusieurs base de données respectant le ou les mêmes modèles génériques.

Le procédé selon l'invention permet de générer des représentations de modèles génériques, à partir de données numériques et alphanumériques figurant dans une ou plusieurs bases de données catalogue de fabricants. Ces représentations génériques peuvent être utilisées dans des plans 2D et 3D, détaillés ou non. Elles peuvent être aussi représentatives de schémas fonctionnels.

Le procédé selon l'invention permet en outre d'obtenir automatiquement des prix de matériels et d'installation tenant compte de l'incidence des facilités de mise en oeuvre du matériel, résultant du catalogue du fournisseur tel qu'il est décrit d'une façon générique et tenant compte du contexte d'utilisation dans la maquette numérique. De tels prix peuvent notamment être utilisés pour optimiser un choix de matériels.

Selon des modes de réalisation, ladite au moins une fonction dudit au moins un élément matériel réel à installer est déterminée à partir de spécifications techniques reçues et de règles prédéterminées.

Selon des modes de réalisation, ledit modèle générique comprend un identifiant unique, l'identifiant unique étant associé audit au moins un élément matériel identifié.

Selon des modes de réalisation, en réponse à ladite interrogation, toutes les caractéristiques associées audit au moins élément matériel identifié sont obtenues, ledit modèle générique créé ne comprenant que certaines caractéristiques techniques associées audit au moins élément matériel identifié.

Selon des modes de réalisation, en réponse à ladite interrogation, toutes les caractéristiques associées audit au moins élément matériel identifié sont obtenues, ledit modèle générique créé comprenant toutes les caractéristiques associées audit au moins élément matériel identifié, l'accès aux caractéristiques techniques dudit modèle générique créé étant libre et l'accès aux autres caractéristiques dudit modèle générique créé étant limité.

L'invention a aussi pour objet un procédé pour ordinateur d'aide à l'installation d'au moins un élément matériel de construction à installer, cet au moins un élément matériel étant décrit dans au moins une base de données comprenant la description d'une pluralité d'éléments matériels ayant au moins une même fonction technique, la description de chaque élément matériel de la pluralité d'éléments matériels comprenant un identifiant, un ensemble de caractéristiques non techniques et un ensemble de caractéristiques techniques, ce procédé comprenant les étapes suivantes :
- réception de résultats d'une étude de conception d'une installation et d'au moins une indication permettant l'identification d'au moins un élément matériel à installer et dont des caractéristiques techniques ont été utilisées pour effectuer ladite étude de conception ;
- interrogation d'au moins une base de données et obtention de caractéristiques complémentaires relatives à un élément matériel ayant une même fonction que celle dudit au moins un élément matériel à installer et dont des caractéristiques techniques ont été utilisées pour effectuer ladite étude de conception, lesdites caractéristiques complémentaires étant différentes des caractéristiques techniques utilisées pour effectuer ladite étude de conception ;
- étude complémentaire de ladite installation selon les caractéristiques complémentaires ; et
- transmission de résultats de l'étude complémentaire.

Le procédé selon l'invention permet ainsi d'utiliser, de façon masquée, des données relatives à des éléments matériels réels dans une étude de conception d'installation électrique et/ou énergétique d'une maquette numérique, pour respecter l'exigence de neutralité vis-à-vis des fournisseurs dans les appels d'offres publics et privés.

Le procédé selon l'invention permet en outre d'effectuer, à l'aide de configurateurs, des choix automatisés d'éléments matériels, notamment lorsqu'ils sont constitués d'un ou plusieurs composants, selon des contraintes d'installation et des préférences d'un concepteur, et selon différents catalogues de fournisseurs regroupés dans une ou plusieurs base de données respectant les mêmes modèles génériques.

Le procédé selon l'invention permet de générer des représentations de modèles génériques, à partir de données numériques et alphanumériques figurant dans une ou plusieurs bases de données catalogue de fabricants. Ces représentations peuvent être utilisées dans des nomenclatures, des plans 2D et 3D, détaillés ou non. Elles peuvent être représentatives de schémas fonctionnels.

Le procédé selon l'invention permet en outre d'obtenir automatiquement des prix de matériels et d'installation tenant compte de l'incidence des facilités de mise en oeuvre du matériel, résultant du catalogue du fournisseur tel qu'il est décrit d'une façon générique et tenant compte du contexte d'utilisation dans la maquette numérique. De tels prix peuvent notamment être utilisés pour optimiser un choix de matériels.

Selon des modes de réalisation, lesdites caractéristiques complémentaires obtenues sont relatives à l'élément matériel auquel sont associées les caractéristiques techniques utilisées pour effectuer ladite étude de conception.

Selon des modes de réalisation, ladite étude complémentaire de ladite installation comprend une étape de calcul de coût, le coût calculé comprenant un coût de fourniture et un coût d'installation d'au moins un élément matériel à installer et dont des caractéristiques techniques ont été utilisées pour effectuer ladite étude de conception, le coût calculé permettant une optimisation d'un choix d'élément matériel à installer.

Selon des modes de réalisation, lesdits éléments matériels sont des éléments matériels électriques et/ou énergétiques, constitués d'un ou plusieurs composants.

Selon des modes de réalisation, lesdites spécifications techniques reçues proviennent d'une maquette numérique.

L'invention a également pour objet un dispositif comprenant des moyens adaptés à la mise en oeuvre de chacune des étapes du procédé décrit précédemment, un programme d'ordinateur comprenant des instructions adaptées à la mise en oeuvre de chacune des étapes du procédé décrit précédemment lorsque ledit programme est exécuté sur un ordinateur ainsi qu'un moyen de stockage d'informations, amovible ou non, partiellement ou totalement lisible par un ordinateur ou un microprocesseur comportant des instructions de code d'un programme d'ordinateur pour l'exécution de chacune des étapes du procédé précédemment décrit.

Les avantages procurés par ce dispositif, ce programme d'ordinateur et ce moyen de stockage d'informations sont similaires à ceux évoqués précédemment.

### BREVE DESCRIPTION DES FIGURES

D'autres avantages, buts et caractéristiques de la présente invention ressortent de la description détaillée qui suit, faite à titre d'exemple non limitatif, au regard des dessins annexés dans lesquels :
- la figure 1, comprenant les figures 1a et 1b, illustre un exemple d'une image sommaire d'un modèle générique représentant un disjoncteur boîtier moulé tripolaire, seul et monté dans un kit de montage, respectivement ;
- la figure 2, comprenant les figures 2a à 2d, illustre des exemples d'images de disjoncteurs modulaires (figures 2a à 2c) ayant des caractéristiques techniques similaires, provenant de catalogues de fabricants différents, ainsi qu'une image sommaire (figure 2d) pouvant être utilisée dans un modèle générique représentant ces disjoncteurs ;

- la figure 3 illustre un exemple de schéma électrique fonctionnel avec représentation des bornes d'un modèle générique d'un télérupteur ;
- la figure 4 illustre schématiquement un exemple de processus selon des modes de réalisation de l'invention pour conduire des études de conception et de réalisation, selon des contraintes prédéterminées ;
- la figure 5 illustre certaines étapes exécutées dans un équipement informatique d'un bureau d'étude et d'ingénierie dans la mise en oeuvre du processus décrit en référence à la figure 4 ;
- la figure 6 illustre certaines étapes exécutées dans un équipement informatique d'un installateur dans la mise en oeuvre du processus décrit en référence à la figure 4 ; et
- la figure 7 illustre un exemple d'un dispositif de traitement d'informations adapté à mettre en oeuvre, au moins partiellement, un mode de réalisation de l'invention.

### DESCRIPTION DETAILLEE DE L'INVENTION

De façon générale, l'invention permet de conduire les différentes phases d'étude d'une installation, par exemple une installation électrique et/ou énergétique d'un bâtiment, en améliorant la qualité de ces études et en optimisant les échanges de données afin d'améliorer le temps nécessaire à la conduite de ces études et limiter les risques d'erreurs.

Selon certains modes de réalisation de l'invention, des modèles numériques d'éléments matériels susceptibles d'être utilisés dans la réalisation d'installations envisagées et définies dans des maquettes numériques et/ou dans des spécifications techniques sont utilisés pour créer des modèles génériques d'éléments matériels, définis selon leurs fonctions. Ces modèles génériques peuvent être utilisés pour conduire des études de conception précises et pour enrichir des maquettes numériques.

L'utilisation de tels modèles génériques basés sur des modèles numériques correspondant à des éléments matériels réels, permet ici de concilier la précision des paramètres de ces modèles avec une absence de référence à ceux-ci. Ils sont suffisamment complets pour faire apparaître les éléments communs des produits de différents fournisseurs mais aussi leurs singularités et différences.

Un matériel réel décrit selon l'invention, lorsqu'il ne comporte que les seules informations du modèle générique, est appelé « pseudo-générique objet » (PGO). Ce terme qualifie ainsi un élément matériel réel provenant d'un catalogue d'un fabricant mais dont les seules caractéristiques techniques rendues librement disponibles ne permettent pas l'identification. Selon l'invention, une étude de conception peut se limiter à une étude ne comprenant que des matériels pseudo-génériques.

Selon certains modes de réalisation, il est néanmoins possible d'obtenir, sur demande, notamment aux fins de commander un matériel, d'autres informations, notamment la ou les références de ses constituants, et dont l'accès est restreint.

Un élément matériel est ici un produit particulier, par exemple une prise électrique murale pour courant monophasé avec terre offrant une capacité de 16 ampères, fabriquée par la société Legrand et commercialisée en gamme Plexo sous la référence unique 697 31 (prise de courant avec boitier) ou un ensemble de composants particuliers, par exemple un boitier ayant une référence particulière et une prise de courant ayant également une référence particulière (Legrand et Plexo sont des marques). La fonction de l'élément matériel, au sens des études de conception et de réalisation, est ici la prise électrique murale.

Selon cet exemple de prise électrique murale, selon lequel une référence unique associée à l'ensemble de composants formant la prise électrique murale est utilisée, un simple modèle générique est de préférence utilisé pour effectuer les études de conception. Pour effectuer des études de réalisation, la référence unique peut être remplacée par une liste de références de composants particuliers de cet ensemble pour affiner les études et permettre la commande de ces composants.

De même, un simple modèle générique peut être utilisé pour représenter un disjoncteur différentiel, que ce dernier soit monobloc ou constitué d'un disjoncteur non différentiel et d'un bloc différentiel.

Selon des modes de réalisation particuliers, un modèle générique d'éléments matériels hérite de certaines ou de toutes les caractéristiques techniques d'un modèle numérique associé à un élément matériel. Seules les caractéristiques non techniques telles que le nom du fabricant, la gamme et la représentation de l'élément matériel ne peuvent pas être transmises au modèle générique. Par ailleurs, une représentation symbolique est associée au modèle générique. Un identifiant commun permet, en ayant les droits correspondants, de retrouver un modèle numérique d'un matériel réel à partir d'un modèle générique.

Selon d'autres modes de réalisation, un modèle générique est un modèle numérique dans lequel certaines caractéristiques ne sont pas directement accessibles. Elles ne le sont qu'à des utilisateurs pourvus des droits correspondants. Ceux-ci peuvent transformer un matériel pseudo-générique respectant un modèle générique en un matériel réel identifié provenant d'un catalogue d'un fabricant, cette transformation pouvant alors être assimilée à une intention de commande.

Sans nécessiter cette transformation, l'utilisation d'au moins une maquette numérique et de modèles numériques correspondant aux modèles génériques utilisés dans celles-ci permet ainsi de conduire des études de réalisation précises utilisant les données de matériels pseudo-génériques, en limitant considérablement la saisie de données.

Toujours selon un mode de réalisation particulier, un modèle générique d'un élément matériel pseudo-générique comprend :
- un nom court ;
- un nom long ;
- une image sommaire ;
- une image détaillée ;
- un schéma fonctionnel ; et
- une fiche technique.

Le nom court est ici une concaténation de valeurs représentatives de critères techniques exclusivement génériques, de préférence ordonnées selon leur importance. Ces critères techniques sont avantageusement choisis pour être synthétiques et significatifs dans leur contexte d'utilisation. Ils peuvent être définis par nature ou famille de produits.

Le nom long est similaire au nom court mais comprend plus de valeurs représentatives de critères techniques.

L'image sommaire peut être utilisée dans des plans d'études de conception (maquette numérique). Elle doit donc être significative sans pour autant permettre l'identification d'une marque ou d'un modèle particulier d'élément matériel. Elle peut comporter, suivant la fonction à laquelle elle est associée, des symboles et/ou des éléments graphiques représentatifs d'éléments fonctionnels. Les dimensions de l'image respectent, de préférence, à l'échelle, celles de la géométrie réelle de l'élément matériel correspondant, telle qu'elle figure dans le catalogue du fabricant.

A titre d'exemple, l'image sommaire d'un disjoncteur comporte une représentation d'un maneton de commande alors que l'image sommaire d'un contacteur, qui ne comporte pas de maneton de commande, ne comporte pas une telle représentation. Cette image sommaire est significative de l'élément matériel auquel elle est associée.

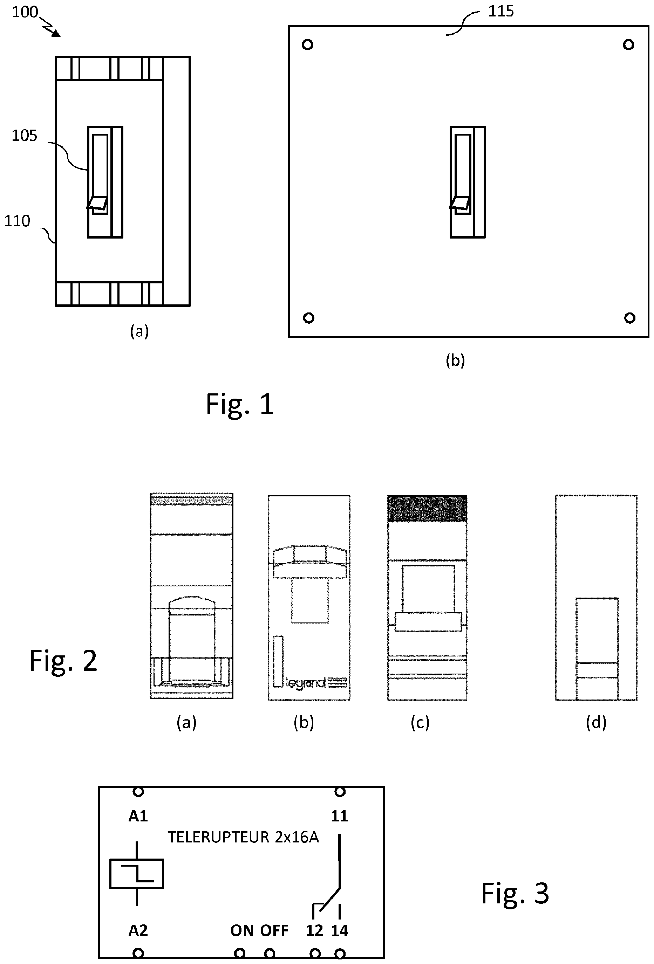

La figure 1, comprenant les figures 1a et 1b, illustre un exemple d'une image sommaire de modèle générique représentant un disjoncteur boîtier moulé tripolaire, seul et monté dans un kit de montage, respectivement. Les dimensions totales de l'image sont celles extérieures de l'appareil. Elles sont généralement indiquées dans le catalogue du fabricant et figurent dans une base de données de matériels.

Comme illustré sur la figure 1a, la partie 105 de l'image sommaire 100 du modèle générique du disjoncteur représente la partie visible de ce dernier lorsqu'il est installé dans un kit de montage, la partie 110 étant masquée dans ce cas.

Ces parties sont généralement matérialisées dans la base de données des matériels par leurs cotes (hauteur, largeur, distances relatives), telles qu'elles existent dans le catalogue du fabricant ou telles qu'elles peuvent être déduites des images provenant du catalogue du fabricant.

La figure 1b illustre la partie visible 105 du modèle générique du disjoncteur représenté sur la figure 1a lorsqu'il est installé dans un kit de montage 115.

Les images représentées sur les figures 1a et 1b sont avantageusement générées par un ou plusieurs processus à partir de données numériques et alphanumériques provenant de la base de données des matériels. Elles n'existent pas en tant que telles dans la base de données des matériels mais les données qui y figurent permettent de les obtenir. A titre d'illustration, ce ou ces processus peuvent être similaires à ceux qui existent dans des logiciels de maquettes numériques.

Selon un mode de réalisation particulier, les images sommaires comprennent plusieurs calques différents permettant leur usage dans des situations différentes. Par exemple, un premier calque peut comprendre une représentation de la partie visible de l'élément matériel lorsqu'il est monté dans un kit de montage tandis qu'un deuxième calque peut comprendre une illustration de la partie masquée et qu'un troisième calque peut comprendre une illustration d'un support pour l'élément tel qu'un kit de montage. L'affichage du premier et du second calques montre alors l'élément matériel seul alors que l'affichage du premier et du troisième calques montre l'élément matériel monté dans son environnement.

La figure 2 illustre des exemples d'images de disjoncteurs ayant des caractéristiques techniques similaires, provenant de catalogues de fabricants différents, ainsi qu'une image sommaire pouvant être utilisée dans un modèle générique représentant ces disjoncteurs. Les images *a, b* et *c* correspondent à des disjoncteurs fabriqués par les sociétés Schneider, Legrand et ABB, respectivement (Schneider, Legrand et ABB sont des marques) tandis que l'image *d* correspond à une image sommaire d'un modèle générique de disjoncteur ayant des caractéristiques techniques similaires à celles des disjoncteurs représentés par les images référencées *a, b* et *c.*

L'image détaillée d'un modèle générique peut être utilisée dans des plans d'études de conception pour en améliorer la qualité visuelle. Une image détaillée peut notamment consister en une représentation 3D de l'élément matériel auquel elle est associée.

Le schéma fonctionnel d'un modèle générique a, par exemple, pour objet l'identification des différentes bornes électriques d'un élément matériel (lorsqu'il s'agit d'un élément électrique) et la description des fonctions de cet élément matériel pour permettre au concepteur de l'intégrer dans le schéma électrique fonctionnel de l'installation, par exemple dans le schéma électrique fonctionnel de l'installation lorsqu'il s'agit d'un élément électrique.

Il est observé que si les schémas électriques fonctionnels fournis par les fabricants comprennent essentiellement des informations génériques telles que des symboles électriques et des tracés normalisés, ils peuvent également comporter des références de produits ainsi qu'un logo du fabricant.

Un schéma fonctionnel d'un modèle générique peut consister en une simple « boîte » rectangulaire comportant un symbole générique de l'élément matériel auquel il est associé, par exemple un symbole conforme à la norme internationale CEI 60617 ou conforme à une norme locale usuelle, ainsi que des bornes de raccordement placées en périphérie avec des références et leur fonction.

Selon un mode de réalisation particulier, le schéma électrique fonctionnel d'un modèle générique est créé dynamiquement à partir d'une fiche technique d'un modèle numérique, selon un contexte d'utilisation, pour ne viser que les informations techniques relatives à ce contexte d'utilisation. Le schéma électrique fonctionnel n'est pas intégré dans la base de données des matériels mais les données numériques qui y figurent permettent de l'obtenir. Ainsi, par exemple, le modèle générique permet d'identifier chaque borne d'un élément matériel par son numéro, sa fonction et sa position. Le nom figurant sur le schéma électrique est de préférence le nom générique court de l'élément matériel associé.

La figure 3 illustre un exemple de schéma fonctionnel d'un modèle générique, représentant ici un télérupteur 2 pôles 16 ampères comprenant sept entrées/sorties dont deux sont utilisées pour commander son état, notées *on* et *off,* deux sont utilisées pour l'alimentation électrique, notées *A1* et *A2,* et trois sont utilisées pour alimenter, sur commande, un appareil, notées *11, 12* et *14.*

La fiche technique d'un modèle générique est basée sur une fiche technique d'un modèle numérique d'un élément matériel. Cette dernière reflète généralement les informations figurant dans le catalogue du fabricant. Elle regroupe toutes les informations techniques sur les produits, ses composants et ses accessoires, selon différents aspects.

Selon un mode de réalisation particulier, la fiche technique d'un modèle générique est créée dynamiquement à partir d'une fiche technique d'un modèle numérique, selon un contexte d'utilisation, pour ne viser que les informations techniques relatives à ce contexte d'utilisation. Elle contient ainsi une indication des différents critères techniques correspondant au contexte d'utilisation visé et leur valeur pour le produit concerné.

A titre d'illustration, concernant la fiche technique d'un disjoncteur, si le contexte visé concerne des calculs de puissance, les informations techniques de la fiche technique d'un modèle numérique qui seront utilisées pour créer une fiche technique d'un modèle générique correspondant seront, par exemple, celles qui correspondent à la tension d'utilisation envisagée (étant observé que la fiche technique d'un modèle numérique donne généralement des informations techniques pour différentes plages de tension d'utilisation).

Toujours à titre d'illustration, les différents contextes d'études électriques d'appareillage d'un tableau électrique peuvent être les suivants :
- la nomenclature (liste des références des composants du produit) ;
- le chiffrage (prix des composants et temps théorique de mise en oeuvre) ;
- les calculs (informations de tension et courants assignés, pouvoirs de coupure, fermeture suivant les tensions d'utilisation, déclassements en température, ...) ;
- l'analyse thermique (pertes en charge des composants et température maximale admissible des différentes parties) ;
- la représentation schématique unifilaire et fonctionnelle; et
- l'analyse du câblage (listes de fils ou représentation 3D des axes de câblage pour les opérations robotisées).

Il est observé ici qu'une même fiche technique d'un modèle générique peut viser plusieurs contextes différents (permettant d'effectuer plusieurs types d'études avec la même fiche technique).

Les paramètres d'un modèle générique (nom court, nom long, image sommaire, image détaillée, schéma fonctionnel et fiche technique) peuvent être obtenus manuellement, automatiquement ou partiellement automatiquement, par exemple à l'aide de règles prédéterminées.

Ces paramètres sont avantageusement mémorisés dans la maquette numérique pour l'enrichir et permettre, ultérieurement, de l'affiner davantage à l'aide d'informations complémentaires relatives aux éléments matériels associés à ces modèles génériques.

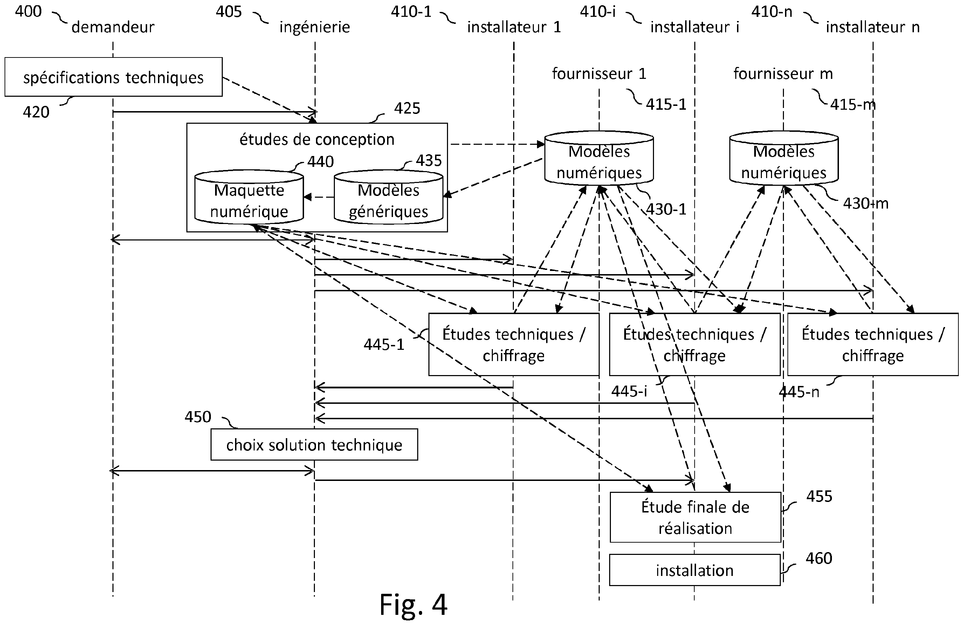

La figure 4 illustre schématiquement un exemple de processus selon des modes de réalisation de l'invention pour conduire des études, notamment de conception et de réalisation, selon des contraintes prédéterminées.

Plus précisément, la figure 4 illustre un exemple d'étapes mises en oeuvre dans un système comprenant des équipements informatiques de traitement de données reliés entre eux par un ou plusieurs réseaux de communication, par exemple le réseau Internet. Ces équipements informatiques, typiquement des ordinateurs personnels, des serveurs ou des terminaux pourvus d'interfaces de communication, voire des terminaux mobiles de type tablette ou smartphone, appartiennent ici à un demandeur 400, un bureau d'étude et d'ingénierie 405, plusieurs installateurs référencés 410-1 à 410-n et des fournisseurs référencés 415-1 à 415-m.

Comme illustré, l'équipement informatique du demandeur 400 adresse, au cours d'une étape 420, des spécifications techniques d'une installation à réaliser à un équipement informatique du bureau d'étude et d'ingénierie 405. Ces spécifications techniques comprennent, par exemple, une maquette numérique permettant de déterminer un nombre de pièces dans lesquelles un réseau électrique doit être installé, la surface de ces pièces et leurs destinations (e.g. bureau, cuisine, chambre, salle d'eau, ...). Elles sont ici transmises sous forme de fichiers électroniques, de préférence cryptés, via le réseau de communication auquel sont reliés les équipements informatiques. De tels fichiers électroniques comprennent, par exemple, un fichier de représentation graphique des bâtiments à installer, et un fichier de type tableur ayant un format prédéterminé. La maquette numérique peut également être reçue d'un tiers, sur requête, par exemple d'un cabinet d'architecte.

Ces spécifications techniques sont utilisées pour effectuer des études de conception, selon des contraintes prédéterminées, référencées 425. Elles sont notamment utilisées pour déterminer les fonctions d'éléments matériels devant être installés, par exemple des prises électriques, des commutateurs, des disjoncteurs, du câble électrique et des gaines électriques. Une liste de ces fonctions d'éléments matériels à installer peut notamment être déterminée automatiquement, dans l'équipement informatique du bureau d'étude et d'ingénierie 405, à partir des spécifications techniques reçues et de règles prédéterminées pouvant notamment être issues de normes.

Après avoir déterminé les fonctions d'éléments matériels nécessaires à l'installation devant être réalisée, un élément matériel de référence est identifié pour chaque fonction d'éléments matériels à installer. Il peut s'agir, par exemple, d'un modèle particulier d'élément matériel correspondant à une référence particulière d'un fournisseur donné. Ces éléments matériels de référence peuvent être prédéterminés, déterminés par un utilisateur ou déterminés de façon automatique selon des règles prédéterminées.

Les fournisseurs de ces éléments matériels de référence sont identifiés et l'équipement informatique du bureau d'étude et d'ingénierie 405 interroge une ou plusieurs bases de données du ou des fournisseurs correspondants, par exemple la base de données 430-1 du fournisseur 415-1, pour obtenir des informations techniques relatives à ces éléments matériels de référence.

Plus précisément, l'équipement informatique du bureau d'étude et d'ingénierie 405 interroge ces bases de données pour obtenir les modèles numériques des éléments matériels de référence afin de créer des modèles génériques correspondants, référencés 435, selon des informations relatives au(x) contexte(s) des études de conception envisagées, comme décrit précédemment.

Selon un mode de réalisation particulier, l'interrogation est basée sur un identifiant de l'élément matériel de référence. Alternativement, cette interrogation est basée sur la fonction recherchée et, le cas échéant, d'autres critères de sélection tels qu'une famille ou une gamme de produits.

L'équipement informatique du bureau d'étude et d'ingénierie 405 obtient ainsi un modèle numérique de chaque élément matériel de référence préalablement identifié.

Les modèles génériques des éléments matériels à installer ainsi obtenus sont utilisés pour conduire les études de conception, selon les besoins qui leur sont propres, et, de préférence, enrichir une maquette numérique 440 préalablement reçue, c'est-à-dire une description fonctionnelle, graphique et/ou textuelle, de l'installation envisagée.

Des résultats de ces études de conception peuvent alors être transmis par l'équipement informatique du bureau d'étude et d'ingénierie 405 à celui du demandeur 400, de préférence sous forme cryptée.

Ils peuvent également être transmis à des équipements informatiques d'installateurs (e.g. les installateurs 410-1 à 410-n) pour leur permettre d'effectuer des études techniques et, le cas échéant, un chiffrage. Ces résultats peuvent notamment comprendre la maquette numérique enrichie lors de l'étude de conception ou une partie de cette maquette numérique. A nouveau, ces données sont de préférence cryptées pour être transmises.

Selon des modes de réalisation de l'invention, un identifiant de chaque élément matériel de référence utilisé pour conduire l'étude de conception est transmis aux équipements des fournisseurs dans les résultats des études de conception, par exemple dans la maquette numérique, pour les aider à conduire d'autres études, par exemple des études techniques et/ou des études de chiffrage référencées 445-1 à 445-n. Alternativement, des indications permettant de retrouver ces éléments matériels de référence peuvent être utilisées à la place des identifiants. Il peut s'agir, par exemple, des fonctions des éléments matériels à installer et d'autres critères de sélection tels qu'une famille ou une gamme de produits.

Ces identifiants (ou ces indications) permettent notamment aux équipements informatiques d'installateurs d'interroger une ou plusieurs bases de données de fournisseurs, par exemple les bases de données 430-1 et 430-m des fournisseurs 415-1 et 415-m, respectivement, pour obtenir des informations complémentaires, par exemple des informations techniques complémentaires et des informations administratives et commerciales, relatives aux éléments matériels de référence utilisés dans des études précédentes.

De telles informations peuvent ainsi être obtenues directement par les équipements informatiques des installateurs, facilement et sans saisie particulière. Il en résulte notamment un gain de temps important mais également un risque d'erreur réduit.

Au cours de ces étapes, un prix d'installation peut être calculé selon les éléments matériels sélectionnés et selon les conditions d'installation de ces éléments. Le coût d'installation peut notamment être calculé selon des règles prédéterminées prenant en compte des données techniques des éléments matériels à installer (par exemple le mode de fixation de fils électriques, par pincement élastique ou par pincement à vis) et des données topologiques telles que la hauteur à laquelle ces éléments matériels doivent être installés.

Des résultats d'études effectuées par les équipements informatiques des installateurs 445-1 à 445-n sont ensuite transmis à l'équipement informatique du bureau d'étude et d'ingénierie 405, de préférence de façon cryptée. Ce dernier peut ainsi effectuer un choix parmi les solutions proposées (étape 450) en vue de l'installation par un installateur sélectionné, par exemple l'installateur 410-i (étape 460).

Comme illustré, une étude finale de réalisation (étape 455) est de préférence conduite précédemment à l'installation. A nouveau, elle est de préférence effectuée selon des données issues de la maquette numérique de l'installation et selon des données relatives aux éléments matériels sélectionnés issues, par exemple, de la base de données 430-1. Les données techniques des éléments matériels à installer en provenant sont alors enregistrées dans la maquette numérique pour l'enrichir.

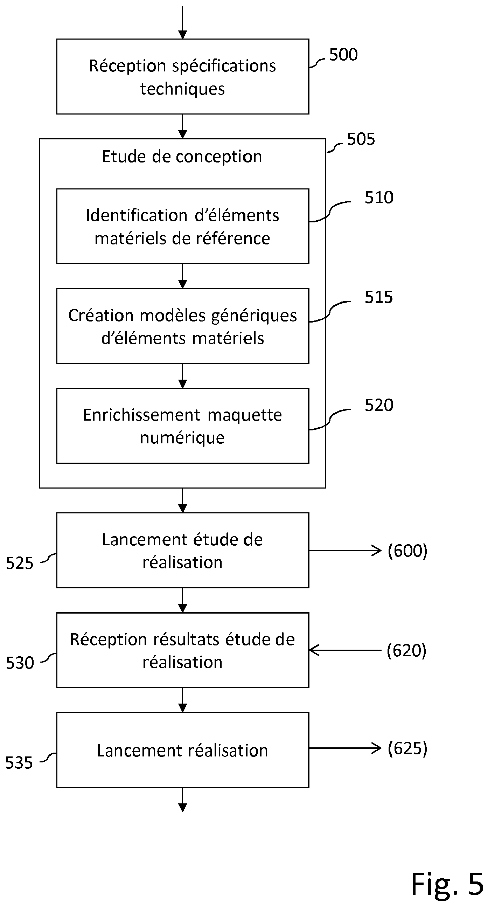

La figure 5 illustre certaines étapes exécutées, par exemple, dans un équipement informatique d'un bureau d'étude et d'ingénierie dans la mise en oeuvre du processus décrit en référence à la figure 4.

Comme illustré, une première étape a pour objet la réception de spécifications techniques relatives à une installation envisagée, typiquement une maquette numérique (étape 500). Il peut notamment s'agir de fichiers électroniques comprenant une description des bâtiments dans lesquels une installation électrique doit être effectuée, par exemple un fichier comprenant une description graphique de ces bâtiments et un fichier de type tableur énumérant les pièces et, pour chacune d'elles, fournissant des spécifications techniques telles des dimensions, une destination, des matériaux de construction, la présence ou non de faux-plafonds, etc..

Une étape suivante (étape 505) a ici pour objet une étude de conception. Elle est effectuée sur la base de spécifications techniques reçues, typiquement une maquette numérique, et d'informations techniques générales sur les éléments matériels à installer, par exemple des règles permettant de définir des fonctions d'équipements selon les pièces à installer. A ces fins et selon un mode de réalisation particulier, une liste des fonctions des éléments matériels à installer est tout d'abord construite à partir des spécifications techniques reçues et de règles prédéterminées établissant, par exemple, un lien entre, d'une part, un nombre de prises électriques murales et, d'autre part, la surface d'une pièce et sa destination.

A partir de cette liste de fonctions d'éléments matériels à installer et selon un mode de réalisation particulier, est dérivée une liste d'éléments matériels de référence (étape 510), un élément matériel de référence étant déterminé pour chaque fonction d'éléments matériels à installer. Comme décrit précédemment, il peut s'agir, par exemple, d'un modèle particulier d'élément matériel correspondant à une référence particulière d'un fournisseur donné, choisi de façon manuelle ou automatique. Ainsi, à titre d'illustration, s'agissant de la fonction «prise électrique monophasée avec terre de 16 ampères », l'élément matériel de référence peut être choisi comme étant le modèle prise électrique 2P+T de la gamme Plexo du fabricant Legrand.

Après avoir déterminé une liste d'éléments matériels de référence, un modèle générique d'élément matériel est créé pour chacun d'eux (étape 515). Ce modèle générique est obtenu à partir d'un modèle numérique associé à l'élément matériel de référence correspondant, ce modèle numérique étant ici obtenu par interrogation d'une base de données du fabricant ou d'un fournisseur de l'élément matériel de référence. Le modèle générique comprend certaines informations techniques du modèle numérique ainsi que des données extérieures, par exemple une image sommaire qui peut être obtenue automatiquement ou sélectionnée par un utilisateur.

Selon d'autres modes de réalisation, les modèles génériques des éléments matériels à installer sont créés directement pour chaque fonction de la liste de fonctions d'éléments matériels à installer, en utilisant des critères de sélection pour interroger des bases de données de fabricants.

Les modèles génériques des éléments matériels à installer sont utilisés pour effectuer l'étude de conception et enrichir la maquette numérique (étape 520).

Dans une étape suivante (étape 525), des résultats de l'étude de conception comprenant, de préférence, la maquette numérique enrichie ou une partie de cette dernière, sont transmis à des équipements informatiques d'installateurs pour permettre à ces derniers d'effectuer des études complémentaires, par exemple des études techniques et des études de chiffrage. Dans des résultats de l'étude de conception sont transmises des informations permettant d'identifier les éléments matériels de référence utilisés pour effectuer l'étude de conception afin de permettre l'obtention d'informations complémentaires concernant ces éléments matériels. Ces informations d'identification sont, par exemple, des identifiants uniques déterminés par l'équipement informatique du bureau d'étude et d'ingénierie ou des critères de sélection.

En réponse à la transmission de résultats de l'étude de conception et d'information permettant d'identifier les éléments matériels de référence utilisés, l'équipement informatique du bureau d'étude et d'ingénierie reçoit, d'au moins un équipement informatique d'un installateur, des résultats d'études techniques et, le cas échéant, des résultats de chiffrage (étape 530). Ces résultats reçus sont utilisés par le bureau d'étude ou l'ingénierie pour sélectionner une solution technique et un installateur parmi les différentes entreprises consultées, et, ainsi, le cas échéant, lancer la réalisation (étape 535).

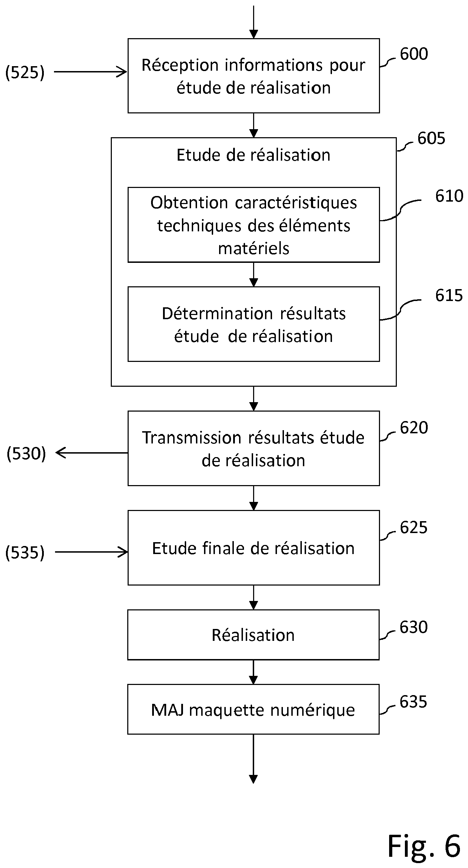

La figure 6 illustre certaines étapes exécutées, par exemple, dans un équipement informatique d'un installateur dans la mise en oeuvre du processus décrit en référence à la figure 4.

Une première étape a ici pour objet la réception d'informations techniques permettant la conduite d'études complémentaires, par exemple d'études de réalisation (étape 600). Ces informations peuvent comprendre, par exemple, des résultats complets ou partiels d'études de conception, typiquement une maquette numérique enrichie ou une partie de maquette numérique enrichie.

Selon des modes de réalisation particuliers, elles comprennent des informations permettant d'identifier des éléments matériels de référence utilisés pour effectuer des études de conception afin de permettre l'obtention d'informations complémentaires concernant ces éléments matériels. Comme décrit précédemment, ces informations d'identification sont, par exemple, des identifiants uniques déterminés par l'équipement informatique du bureau d'étude et d'ingénierie.

Ces informations sont ici reçues d'un équipement informatique d'un bureau d'étude et d'ingénierie à travers le réseau de communication reliant ces équipements informatiques ou via tout autre moyen.

Une étude de réalisation est alors conduite sur la base des informations reçues (étape 605).

A ces fins, une ou plusieurs bases de données de fournisseurs sont interrogées pour obtenir des informations complémentaires concernant les éléments matériels de référence utilisés dans des études préalables (étape 610). Ces interrogations sont ici basées sur les informations reçues permettant d'identifier les éléments matériels de référence utilisés dans des études préalables. En réponse à ces interrogations, l'équipement informatique de l'installateur peut recevoir les modèles numériques des éléments matériels visés ou seulement certaines informations. Dans ce dernier cas, les informations demandées sont, de préférence, spécifiées dans des requêtes utilisées lors des interrogations des bases de données.

Les informations reçues, par exemple, des résultats complets ou partiels d'études de conception ainsi que des maquettes numériques, ainsi que les informations complémentaires concernant les éléments matériels de référence utilisés dans des études antérieures sont alors utilisées pour effectuer des études de réalisation et/ou des études de chiffrage (étape 615).

Selon d'autres modes de réalisation, les informations reçues, par exemple des résultats complets ou partiels d'études de conception, typiquement des maquettes numériques, ainsi que des informations relatives à des éléments matériels équivalant aux éléments matériels de référence utilisés dans des études antérieures sont utilisées pour effectuer des études de réalisation et/ou des études de chiffrage. Une telle équivalence peut être définie manuellement par un utilisateur ou automatiquement, par exemple, à l'aide de tables de correspondance. Dans une telle situation, les bases de données de fournisseurs sont interrogées pour obtenir des informations relatives aux éléments matériels équivalents aux éléments matériels de référence utilisés dans des études antérieures. Ces informations peuvent notamment être constituées de modèles numériques des éléments matériels équivalents.

Les résultats obtenus, par exemple un chiffrage, sont avantageusement utilisés pour enrichir la maquette numérique préalablement reçue. Ils sont ensuite transmis, par exemple sous forme de maquette numérique enrichie, à un équipement informatique qui saura les exploiter (étape 620), par exemple l'équipement informatique du bureau d'étude et d'ingénierie duquel ont été reçues des données utilisées pour conduire les études dont les résultats sont transmis.

Le chiffrage peut notamment comprendre un calcul de coût, le coût calculé comprenant un coût de fourniture et un coût d'installation des éléments matériels à installer, le coût calculé permettant une optimisation d'un choix d'élément matériel à installer.

Des instructions d'installation peuvent alors être reçues si l'installateur considéré est retenu à ces fins.

A nouveau, une étude finale de réalisation (étape 625) est de préférence conduite précédemment à la réalisation de l'installation (étape 630). Elle est de préférence effectuée selon des données issues de la maquette numérique enrichie de l'installation (comprenant des données relatives aux éléments matériels sélectionnés).

La réalisation de l'installation (étape 630) comprend la commande des matériels pseudo-génériques décrits selon les informations libres d'accès du modèle générique et celles d'accès restreint permettant d'identifier leurs références ou celles de leurs composants. Ces informations étant connues, elles peuvent alors être transmises à la maquette numérique conforme à réalisation, de façon à en faciliter l'exploitation ultérieure et la maintenance (étape 635).

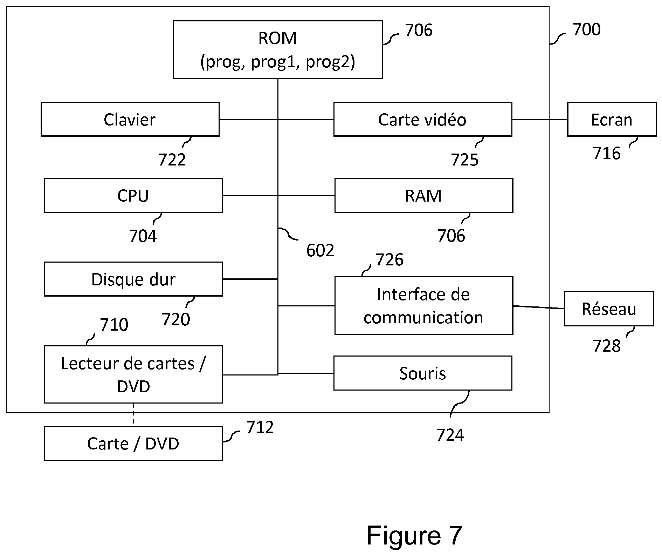

La figure 7 illustre un exemple de dispositif pouvant être utilisé pour mettre en oeuvre, au moins partiellement, un mode de réalisation, notamment des étapes décrites en référence aux figures 4, 5 et 6.

Le dispositif 700 est par exemple un serveur, un ordinateur ou un terminal.

Le dispositif 700 comporte de préférence un bus de communication 702 auquel sont reliés :
- une unité centrale de traitement ou microprocesseur 704 (CPU, sigle de *Central Processing Unit* en terminologie anglo-saxonne) ;
- une mémoire morte 706 (ROM, acronyme de *Read Only Memory* en terminologie anglo-saxonne) pouvant comporter le système d'exploitation et des programmes tels que "Prog" ;
- une mémoire vive ou mémoire cache 708 (RAM, acronyme de *Random Access Memory* en terminologie anglo-saxonne) comportant des registres adaptés à enregistrer des variables et paramètres créés et modifiés au cours de l'exécution des programmes précités ;
- un lecteur 710 de support amovible de stockage 712 tel qu'une carte mémoire ou un disque, par exemple un disque DVD ; et
- une carte graphique 714 reliée à un écran 716.

Optionnellement, le dispositif 700 peut également disposer des éléments suivants :
- un disque dur 720 pouvant comporter les programmes "Prog" précités et des données traitées ou à traiter selon l'invention ;
- un clavier 722 et une souris 724 ou tout autre dispositif de pointage comme un crayon optique, un écran tactile ou une télécommande permettant à l'utilisateur d'interagir avec les programmes selon l'invention ; et
- une interface de communication 726 reliée à un réseau de communication distribué 728, par exemple un réseau de communication sans fil et/ou un réseau de communication local, l'interface étant apte à transmettre et à recevoir des données.

Le bus de communication permet la communication et l'interopérabilité entre les différents éléments inclus dans le dispositif 700 ou reliés à lui. La représentation du bus n'est pas limitative et, notamment, l'unité centrale est susceptible de communiquer des instructions à tout élément du dispositif 700 directement ou par l'intermédiaire d'un autre élément du dispositif 700.

Le code exécutable de chaque programme permettant à l'appareil programmable de mettre en oeuvre les processus selon l'invention peut être stocké, par exemple, dans le disque dur 720 ou en mémoire morte 706.

Selon une variante, le code exécutable des programmes pourra être reçu par l'intermédiaire du réseau de communication 728, via l'interface 726, pour être stocké de façon identique à celle décrite précédemment.

De manière plus générale, le ou les programmes pourront être chargés dans un des moyens de stockage du dispositif 700 avant d'être exécutés.

L'unité centrale 704 va commander et diriger l'exécution des instructions ou portions de code logiciel du ou des programmes selon l'invention, instructions qui sont stockées dans le disque dur 720 ou dans la mémoire morte 706 ou bien dans les autres éléments de stockage précités. Lors de la mise sous tension, le ou les programmes qui sont stockés dans une mémoire non volatile, par exemple le disque dur 720 ou la mémoire morte 706, sont transférés dans la mémoire vive 708 qui contient alors le code exécutable du ou des programmes selon l'invention, ainsi que des registres pour mémoriser les variables et paramètres nécessaires à la mise en oeuvre de l'invention.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention ne se limite pas aux formes de réalisation présentées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Procédé pour ordinateur d'aide à l'installation d'au moins un élément matériel de construction à installer, cet au moins un élément matériel étant décrit dans au moins une base de données comprenant la description d'une pluralité d'éléments matériels ayant au moins une même fonction technique, la description de chaque élément matériel de la pluralité d'éléments matériels comprenant un identifiant, un ensemble de caractéristiques non techniques et un ensemble de caractéristiques techniques, ce procédé étant **caractérisé en ce qu'**il comprend les étapes suivantes,
- réception (500) d'exigences et/ou de contraintes d'installation sous forme de spécifications techniques ;
- détermination, à partir des spécifications techniques reçues, d'au moins une fonction d'au moins un élément matériel à installer et identification (510) d'au moins un élément matériel de la pluralité d'éléments matériels selon ladite au moins une fonction déterminée ;
- interrogation (515) d'au moins une base de données selon ledit au moins un élément matériel identifié et, en réponse à ladite interrogation, obtention de caractéristiques associées audit au moins élément matériel identifié et création d'un modèle générique, le modèle générique comprenant des informations techniques obtenues en réponse à ladite interrogation et déterminées selon au moins une information de contexte d'utilisation ;
- étude de conception de la dite installation, l'étude de conception étant au moins partiellement basée sur le modèle générique créé ;
- transmission (525) de résultats de ladite étude de conception et d'au moins un identifiant dudit au moins un élément matériel identifié à au moins deux systèmes de traitement de l'information distincts, chacun des au moins deux systèmes de traitement de l'information permettant une étude complémentaire à ladite étude de conception ;
- en réponse à la transmission de résultats de ladite étude de conception et dudit au moins identifiant, réception (530), de chacun des au moins deux systèmes de traitement de l'information, de résultats d'une étude complémentaire ; et
- comparaison des résultats reçus pour déterminer au moins un élément matériel à installer.

2. Procédé selon la revendication 1 selon lequel ladite au moins une fonction dudit au moins un élément matériel à installer est déterminée à partir de spécifications techniques reçues et de règles prédéterminées.

3. Procédé selon la revendication 1 ou la revendication 2 selon lequel ledit modèle générique comprend un identifiant unique, l'identifiant unique étant associé audit au moins un élément matériel identifié.

4. Procédé selon l'une quelconque des revendications 1 à 3 selon lequel, en réponse à ladite interrogation, toutes les caractéristiques associées audit au moins élément matériel identifié sont obtenues, ledit modèle générique créé ne comprenant que certaines caractéristiques techniques associées audit au moins élément matériel identifié.

5. Procédé selon l'une quelconque des revendications 1 à 3 selon lequel, en réponse à ladite interrogation, toutes les caractéristiques associées audit au moins élément matériel identifié sont obtenues, ledit modèle générique créé comprenant toutes les caractéristiques associées audit au moins élément matériel identifié, l'accès aux caractéristiques techniques dudit modèle générique créé étant libre et l'accès aux autres caractéristiques non techniques dudit modèle pseudo-générique créé étant limité.

6. Procédé pour ordinateur d'aide à l'installation d'au moins un élément matériel de construction à installer, cet au moins un élément matériel étant décrit dans au moins une base de données comprenant la description d'une pluralité d'éléments matériels ayant au moins une même fonction technique, la description de chaque élément matériel de la pluralité d'éléments matériels comprenant un identifiant, un ensemble de caractéristiques non techniques et un ensemble de caractéristiques techniques, ce procédé étant **caractérisé en ce qu'**il comprend les étapes suivantes,
- réception (600) de résultats d'une étude de conception d'une installation et d'au moins une indication permettant l'identification d'au moins un élément matériel à installer et dont des caractéristiques techniques ont été utilisées pour effectuer ladite étude de conception ;
- interrogation d'au moins une base de données et obtention (610) de caractéristiques complémentaires relatives à un élément matériel ayant une même fonction que celle dudit au moins un élément matériel à installer et dont des caractéristiques techniques ont été utilisées pour effectuer ladite étude de conception, lesdites caractéristiques complémentaires étant différentes des caractéristiques techniques utilisées pour effectuer ladite étude de conception ;
- étude complémentaire (615) de ladite installation selon les caractéristiques complémentaires ; et
- transmission (620) de résultats de l'étude complémentaire.

7. Procédé selon la revendication 6 selon lequel lesdites caractéristiques complémentaires obtenues sont relatives à l'élément matériel auquel sont associées les caractéristiques techniques utilisées pour effectuer ladite étude de conception.

8. Procédé selon la revendication 6 ou la revendication 7 selon lequel ladite étude complémentaire de ladite installation comprend une étape de calcul de coût, le coût calculé comprenant un coût de fourniture et un coût d'installation d'au moins un élément matériel à installer et dont des caractéristiques techniques ont été utilisées pour effectuer ladite étude de conception, le coût calculé permettant une optimisation d'un choix d'élément matériel à installer.

9. Procédé selon l'une quelconque des revendications précédentes selon lequel lesdits éléments matériels sont des éléments matériels électriques et/ou énergétiques, constitués d'un ou plusieurs composants.

10. Procédé selon l'une quelconque des revendications précédentes selon lequel lesdites spécifications techniques reçues proviennent d'une maquette numérique.

11. Dispositif comprenant des moyens adaptés à la mise en oeuvre de chacune des étapes du procédé selon l'une quelconque des revendications 1 à 10.

12. Programme d'ordinateur comprenant des instructions adaptées à la mise en oeuvre de chacune des étapes du procédé selon l'une quelconque des revendications 1 à 10 lorsque ledit programme est exécuté sur un ordinateur.
